(19) Europäisches Patentamt

European Patent Office

Office européen des brevets

(11) **EP 0 897 816 B1**

(12) **EUROPEAN PATENT SPECIFICATION**

(45) Date of publication and mention
of the grant of the patent:
**01.03.2006 Bulletin 2006/09**

(51) Int Cl.:
***B60C 23/06*** (2006.01)

(21) Application number: **98306736.4**

(22) Date of filing: **21.08.1998**

(54) **Apparatus for alarming decrease in tyre air-pressure and method thereof**

Gerät und Verfahren zum Warnen vor Reifendruckverlust

Appareil et procédé d'alarme de réduction de pression d'un pneumatique

(84) Designated Contracting States:
**DE FR GB**

(30) Priority: **22.08.1997 JP 22613997**

(43) Date of publication of application:
**24.02.1999 Bulletin 1999/08**

(73) Proprietors:
• **Sumitomo Rubber Industries, Ltd.
Kobe-shi,
Hyogo-ken (JP)**
• **SUMITOMO ELECTRIC INDUSTRIES, LTD
Osaka-shi,
Osaka-fu 541 (JP)**

(72) Inventors:
• **Yanase, Minao
Kobe-shi,
Hyogo-ken (JP)**
• **Oshiro, Yuji
Kakogawa-shi,
Hyogo-ken (JP)**

(74) Representative: **Manitz, Finsterwald & Partner
GbR**
**Postfach 31 02 20**
**80102 München (DE)**

(56) References cited:
**EP-A- 0 712 740          EP-A- 0 716 941**
**EP-A- 0 783 983**

## Description

The present invention relates to an apparatus for alarming decrease in tyre air-pressure and a method thereof. More particularly, it relates to an apparatus for alarming decrease in tyre air-pressure and a method thereof which is capable of reliably determining decrease in internal pressure of a tyre, especially of a vehicle which is equipped with a limited slip differential device (LSD).

It is known that decrease in tyre air-pressure results in a smaller dynamic load or rolling radius of a tyre and in a faster revolution speed than a tyre of normal air-pressure. For instance, in Japanese Unexamined Patent Publication No 149119/1995 a method is disclosed for detecting decrease in internal pressure based on relative differences in the number of revolution of tyres. Further, since the number of revolutions of tyres on a vehicle are influenced by vehicle movements, acceleration/deceleration, load and speed of the vehicle, various measures have been taken to eliminate the influences of such things.

However, there are vehicles which are equipped with a limited slip differential device to improve the driving performance in cornering or the like. According to the mechanism of the limited slip differential device, differentiation in the wheel speeds is restricted until the differential torque requirement exceeds a set value and until then the right and left driving wheels are rotated at equal speeds. Due to this arrangement, influences of decreased air-pressure in one tyre are not reflected in the number of revolutions so that loss of pressure cannot be detected based on relative comparison of the numbers of revolutions.

Document EP-A-0 716 941 discloses a method of and a device for detecting tyre pressure drop wherein the influence of a turning radius of a vehicle is excluded to be capable of detecting a deflated tyre.

Document EP-A-0 783 983 discloses a method and a device for identifying the kind of a tyre, namely a tyre for winter use and a tyre for summer use. The determination of different kinds of tyres is performed by means of a relation between a ratio of a front wheel rotational speed to a rear wheel rotational speed and a function of speed.

The present invention has been made in view of these facts, and it is an object thereof to provide an apparatus for alarming decrease in tyre air-pressure and a method thereof which can reliably determine a decrease in internal pressure of a tyre on a vehicle which is equipped with a limited slip differential device.

This object is achieved by an apparatus according to claim 1 and a method according to claim 2 of the present invention.

Further aspect of the invention will be apparent from the following description, by way of example only, in which:

Figure 1 is a block diagram of an apparatus for alarming decrease in tyre air-pressure according to the present invention;

Figure 2 is a block diagram showing the electric arrangements of the apparatus for alarming decrease in tyre air-pressure of Figure 1;

Figure 3 is a schematic diagram showing a relationship between reciprocals of turning radii calculated from right and left differences of following wheels and judged values;

Figure 4 is a schematic diagram showing a relationship between reciprocals of turning radii calculated from right and left differences of driving wheels and judged values;

Figure 5 is a diagram showing a relationship between reciprocals of turning radii and judged values of driving wheels in case a vehicle is running with all four wheel tyre being of normal pressure;

Figure 6 is a diagram showing a relationship between reciprocals of turning radii and judged values of driving wheels in case FL and FR are each decreased in pressure by 40%, respectively;

Figure 7 is a diagram showing a relationship between reciprocals of turning radii and judged values of driving wheels in case RL and RR are each decreased in pressure by 40%, respectively;

Figure 8 is a diagram showing a relationship between reciprocals of turning radii and judged values of following wheels in case a vehicle is running with all four wheel tyres being of normal pressure;

Figure 9 is a diagram showing a relationship between reciprocals of turning radii and judged values of following wheels in case FL and FR are each decreased in pressure by 40%, respectively;

Figure 10 is a diagram showing a relationship between reciprocals of turning radii and judged values of following wheels in case RL and RR are each decreased in pressure by 40%, respectively;

Figure 11 is a diagram showing a relationship between lateral G and judged values of summer tyres in case an averaged factor is employed;

Figure 12 is a diagram showing a relationship between lateral G and judged values of winter tyres in case an averaged factor is employed;

Figure 13 is a diagram showing $\mu$-s characteristics of summer tyres and winter tyres;

Figure 14 is a diagram showing a relationship between reciprocals of turning radii and judged values of driving wheels in case winter tyres are employed;

Figure 15 is a diagram showing a relationship between reciprocals of turning radii and judged values of driving wheels in case summer tyres are employed; and

Figure 16 is a flowchart related to another embodiment of the present invention.

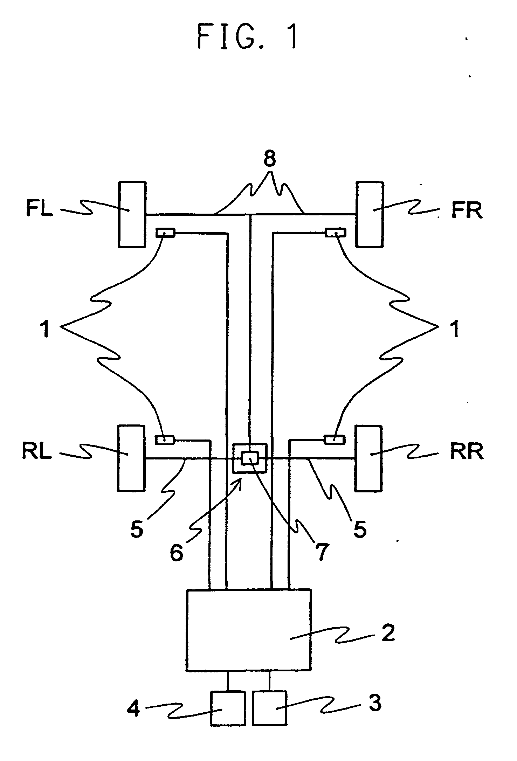

As shown in Figure 1, the apparatus for alarming decrease in tyre air-pressure is employed for detecting whether the air-pressure of any one of four wheels FL, FR, RL and RR attached to a four-wheeled vehicle has decreased or not, and this apparatus is equipped with an ordinary wheel speed sensor 1 provided for each of the tyres FL, FR, RL and RR. Each wheel speed sensor 1 detects the rotational information for each tyre such as the number of revolutions, revolution speed or angular speed. The output of the wheel speed sensor 1 is sent to a control unit 2. There are connected to the control unit 2 a display means 3 comprising liquid crystal display elements, plasma display elements or a CRT for informing the user of the vehicle of either of the tyres FL, FR, RL and RR of which the air-pressure has decreased, and an initialisation switch 4 which can be operated by a driver. A limited slip differential device 7 is provided in the differential gear 6 between the driving shafts 5. It should be noted that 8 denotes a following shaft.

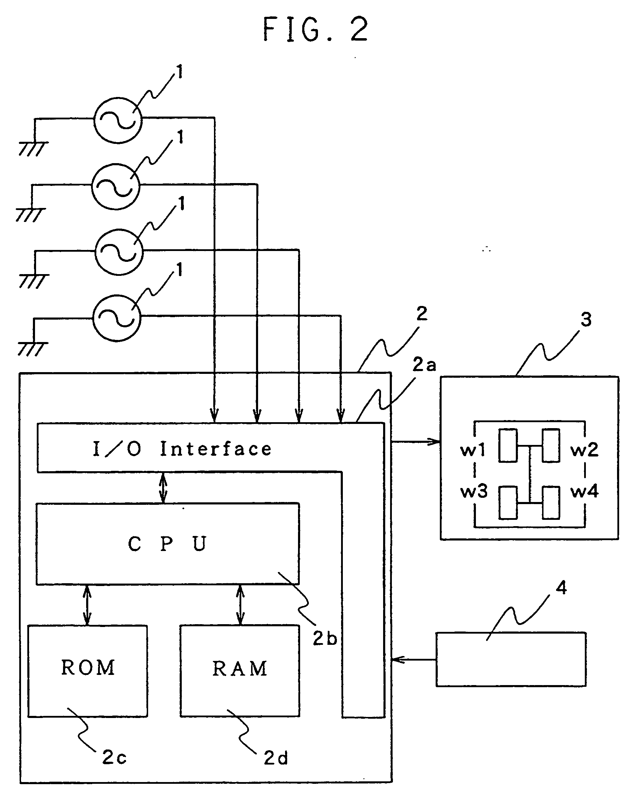

As shown in Figure 2, the control unit 2 is composed of an I/O interface 2a required for sending/receiving signals to/from an external device, a CPU 2b which functions as a centre of calculation processes, a ROM 2c which stores a control operation program for the CPU 2b, and a RAM 2d to which data are temporarily written in or from which written data are read out when the CPU 2b performs control operations. It should be noted that in this embodiment, the wheel speed sensor 1 functions as a rotational information detecting means and the control unit 2 as the memory means, calculating means, and determining means.

The calculating and determining processes of the present invention will now be explained wherein the judged values (DEL values) correspond to difference in two diagonal sums.

First, since right and left driving wheels (tyres) are rotated at equal speed until a turn has been made in which torque exceeding a predetermined differential limit torque is generated, the DEL value calculated from the following equation (1) is proportional only to the right and left differences of the driven wheels during this period.

$$\text{DEL} = \frac{\dfrac{V_{(1)} + V_{(4)}}{2} - \dfrac{V_{(2)} + V_{(3)}}{2}}{\dfrac{V_{(1)} + V_{(2)} + V_{(3)} + V_{(4)}}{4}} \qquad \cdots (1)$$

Note that $V_{(x)}$ : revolution speed of tyre (m/sec)

X : 1 = front left tyre, 2 = front right tyre, 3 = rear left tyre, 4 = rear right tyre.

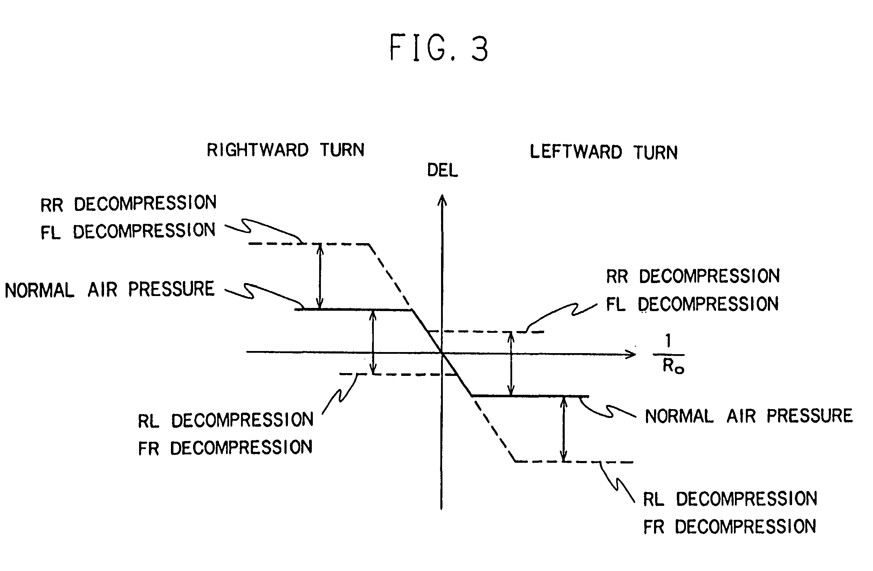

In other words, since the differential torque is dependent on the turning radius unless the vehicle is running on a special road surface, if a reciprocal $1/R_o$ of turning radius $R_o$ obtained from equation (2) based on the right and left differences of the following wheels is calculated for obtaining a DEL value as judged value for decompression, the DEL value corresponds to just the right and left differences of the driven wheels while the differential is restricted as shown in Figure 3, and the DEL value becomes substantially constant when exceeding a set differential torque.

$$\frac{1}{R_o} = \frac{1}{T_w} \times \frac{V_{(1)} - V_{(2)}}{V_{ave}} \qquad \cdots \cdots (2$$

Note That $T_w$ denotes a tread width and $V_{ave}$ an average value of right and left tyres.

In the relationship between the reciprocals $1/R_o$ of the turning radii of the following wheels and the DEL values, decompression of the driving wheels results in a shift in central turning radius of right and left driving wheels of which differential is restricted, and a decompression of the following tyres results in a shift of the calculation of the turning radius itself, and thus, the DEL values are moved in a parallel manner in a vertical direction along a line (diagonal line) for the right and left differences of the following wheels as shown in Figure 3. Therefore, it is required to perform determination of decompression by comparing horizontal portions of normal air-pressure conditions and those of decompressed conditions. For this purpose, it is required to discriminate from which point the horizontal portions shall start in both conditions. However, since horizontal portions differ depending on materials, dimensions or characteristics such as rigidity of the tyre, or the amount of decompression of a tyre, it is quite difficult to specify such horizontal portions (ranges).

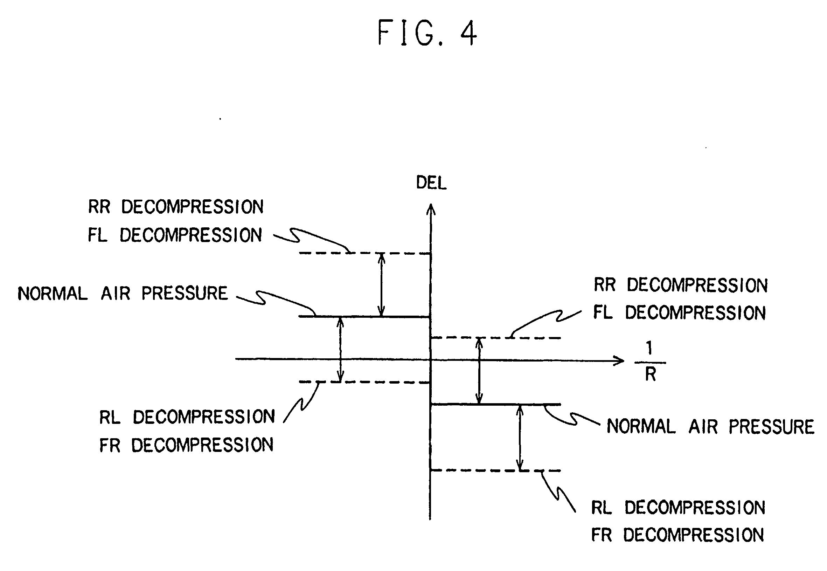

In view of this point, by depicting the reciprocals $1/R_o$ of the turning radii R calculated from the driving shaft on the lateral axis (X-axis) in the present invention, the DEL values are focused at positions at which the lateral axis is 0, i.e. on the vertical axis (Y-axis) when the differential is restricted, regardless of the presence/absence or the position of decompression, as shown in Figure 4. Therefore, by comparing judged values at horizontal portions somewhat remote therefrom, decompression can be easily determined.

It should be noted that although it has been described above that DEL values are horizontal when the limited slip differential device has started differentiation in the case where turning radius has exceeded a certain degree, these values are actually variable depending on speed or driving force of the vehicle or lateral directional acceleration (lateral G), whereby correction is required also at this portion. For instance, load displacement at the time of turning, fluctuations in DEL values due to driving force or sensitivity correction of DEL due to speed can be corrected by preliminarily investigating the degree of influences at the time of tuning the vehicle in order to make variations in DEL values small and to improve the accuracy thereof.

The present invention will now be explained based on an example thereof while it should be noted that the present invention is not limited to only this example.

## EXAMPLE

A vehicle equipped with a limited slip differential device (hereinafter referred to as "LSD equipped vehicle") was fitted with winter tyres at normal air-pressure ($2.2 kg/cm^2$). The dimension of the tyres was 225/45R17.

Then, a LSD equipped vehicle, of which four tyres have been each decreased in air pressure by 40%, respectively, was run similarly to the above vehicle with tyres of normal air-pressure.

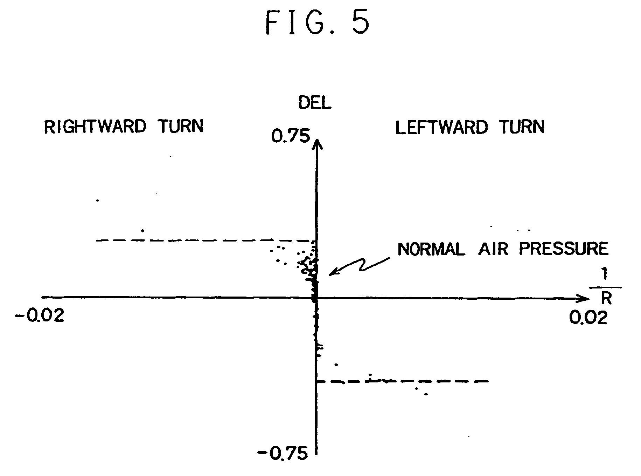

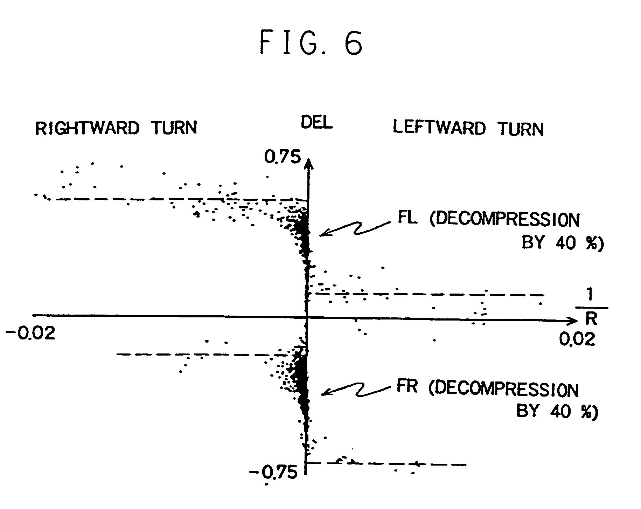

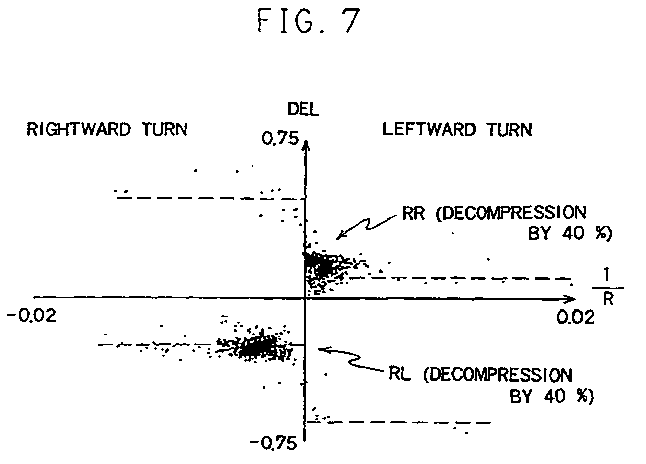

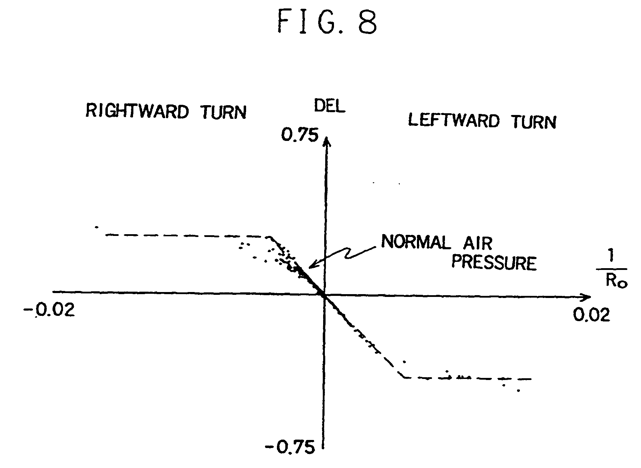

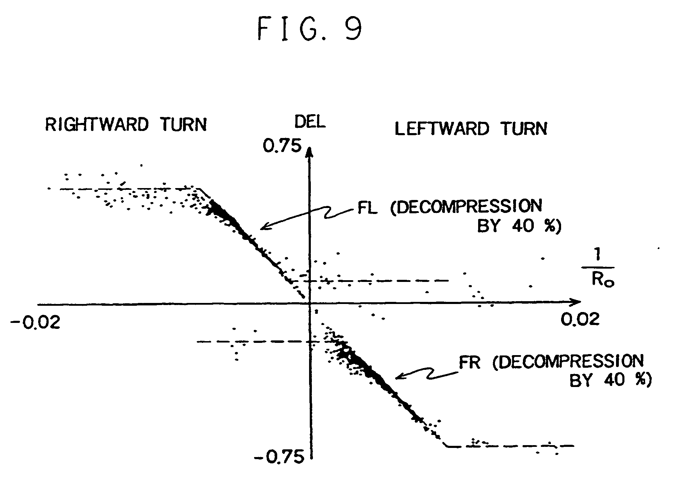

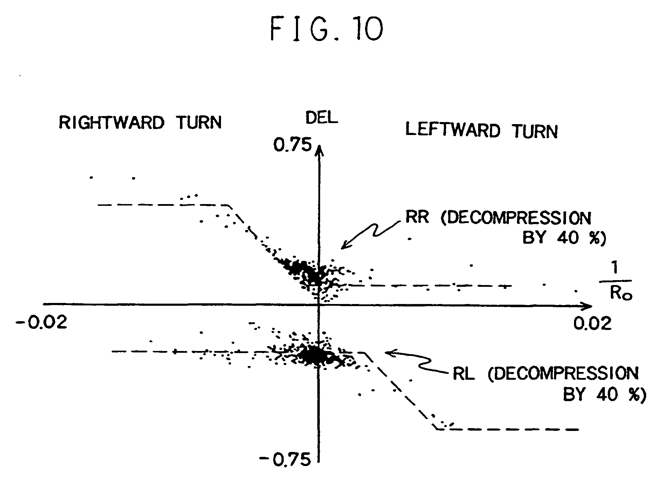

Reciprocals 1/R of turning radii R and DEL values of the driving wheels thus obtained were respectively depicted on the lateral axis and vertical axis, respectively, and the relationship between the reciprocals 1/R of turning radii R and DEL values has been examined. As shown in Figures 5 to 7, it can be understood that data on the diagonal line of Figures 8 to 10 (DEL values) were focused on the vertical axis.

Then, data obtained by dividing values for 1/R into three regions and by simply averaging them are shown in Table 1.

| Rightward turn: | 1/R < -0.002 |
|---|---|
| Straight-ahead driving: | $-0.002 \leq 1/R \leq 0.002$ |
| Leftward turn: | 1/R > 0.002 |

## TABLE 1

| | Rightward Turn | Straight-ahead Driving | Leftward Turn |
|---|---|---|---|
| N.P. (Normal Pressure) | 0.242867 | 0.0247896 | -0.398225 |
| FL (Decompression by 40% | 0.551041 | 0.370204 | 0.0991766 |
| Difference between FL and N.P. | 0.308172 | 0.3454144 | 0.4974016 |
| FR (Decompression by 40%) | -0.215695 | -0.371186 | -0.707161 |
| Difference between FR and N.P. | -0.458562 | -0.3959756 | -0.308936 |
| RL (Decompression by 40%) | -0.237302 | -0.275802 | -0.686021 |
| Difference between RL and N.P. | -0.480169 | -0.3005916 | -0.287796 |
| RR (Decompression by 40%) | 0.426015 | 0.16327 | 0.150903 |
| Difference between RR and N.P. | 0.183148 | 0.1384804 | 0.549128 |

EP 0 897 816 B1

Excision of horizontal portions is thus made easy, comparison with reference values at normal air-pressure (these reference values are preliminarily stored at the time of initialisation) is made easy, and determination of decompression is made possible even in a LSD equipped vehicle. Further, it can be understood that determination of decompression for data on the straight-line portion, though being widely dispersed, was made possible by setting a large decompression determining threshold.

## COMPARATIVE EXAMPLE

Similarly to the preceding example, a relationship between reciprocals $1/R_o$ of turning radii and DEL values of following wheels was obtained in the case of a LSD equipped vehicle run cornering with tyres of normal air-pressure and with tyres decompressed by 40%.

As shown in Figures 8 to 10, while determination of decompression might seemingly be possible by comparing horizontal portions of both, averaged values of diagonal portions, or central values of both, determination of decompression is impossible since these portions are hard to be excised.

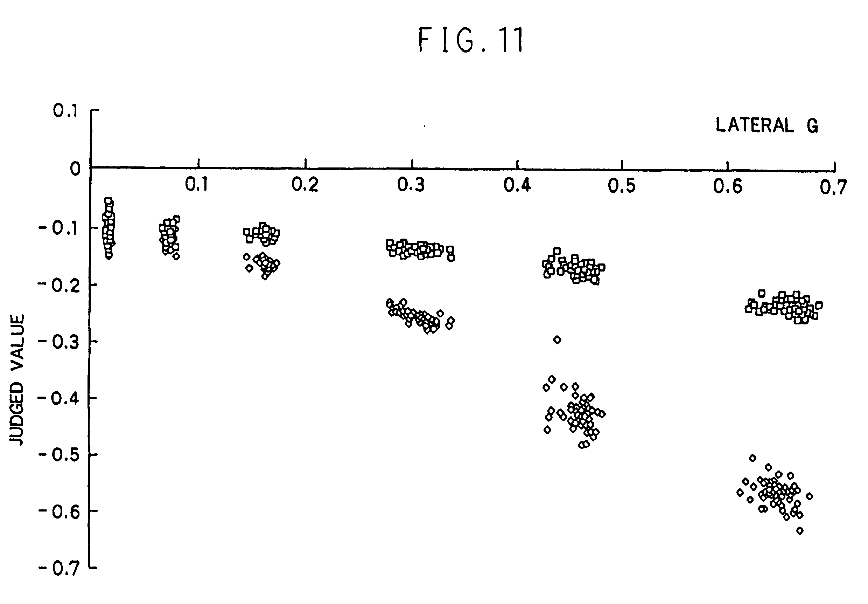

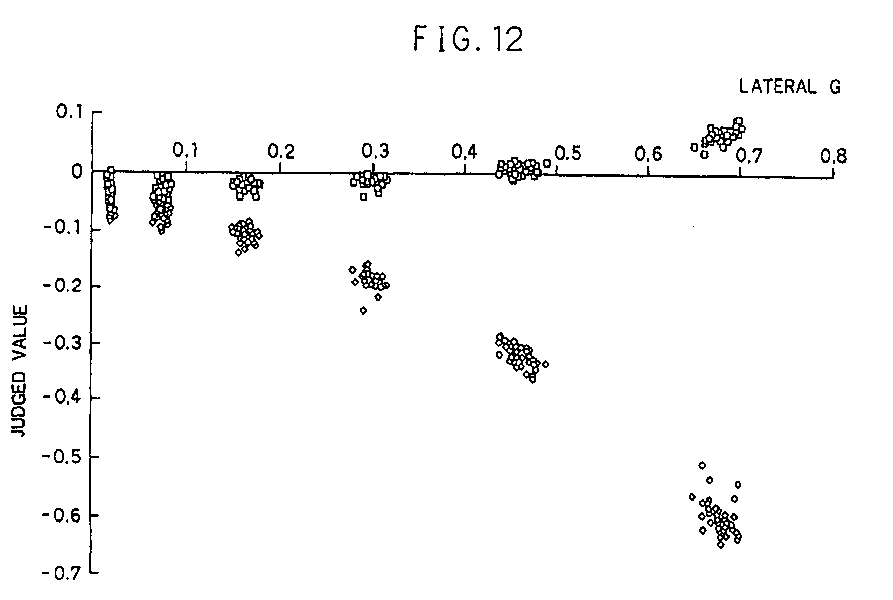

In the preceding example, the factors of summer tyres and winter tyres such as cornering coefficients or speed sensitivity correction coefficients were preliminarily obtained at initialisation running at the time of performing tuning of the vehicle, and averaged values thereof were employed as averaged factors. Cornering correction, for instance, is done as follows: when the lateral G becomes large during cornering, the determined value changes accompanying the increase in lateral G as shown by ◇ marks (actually measured values) in Figures 11 and 12 owing to factors such as load displacement or slip, correction is performed in such a manner that a determined value obtained at the time when the lateral G is large is made equal to a determined value obtained at the time when the lateral G is small.

When employing such averaged factors when performing cornering correction, an increase in lateral G will result in a shortage of correction in the case of winter tyres as indicated by □ marks in Figure 11 and in an excess of correction in the case of summer tyres as indicated by □ marks in Figure 12, whereby exact correction cannot be performed. This, it is required to make restrictions for rejection of later G (threshold) strict (e.g. the thresholds for rejection of lateral G in Figures 11 and 12 need to be set to 0.2), the number of data used for determining alarm is decreased. Consequently, if initialisation is performed by using averaged factors of summer tyres and winter tyres (correction coefficients) in the preceding example, a large number of data needs to be obtained during actual running performed thereafter so that it might take a long time until alarm is determined.

Next, another embodiment of the present invention for improving this point will now be explained.

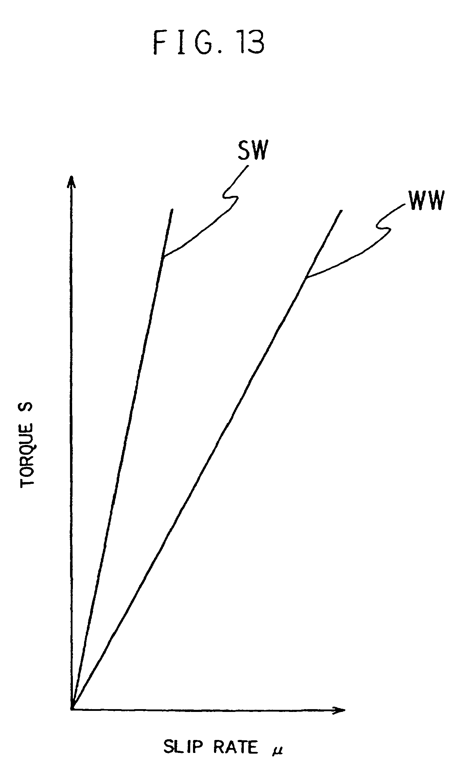

As shown by the schematic diagram of Figure 13, the inclinations of μ-s characteristics (torque-slip rate characteristics) differ between summer tyres SW and winter tyres WW. This indicates that the slip rate of winter tyres WW becomes larger when their torque are equal. In other words, it indicates that torque from the road surface is hardly transmitted since winter tyres are more likely to slip.

Further, in the case of a LSD equipped vehicle with winter tyres, the judged values present a hook-like configuration with respect to reciprocals of turning radii obtained from the driving wheels. This is because handling differences of following wheels just become judged values in the proximity of the straight line, since in a vehicle equipped with LSD, the right and left driving wheels run at equal speeds until the vehicle has turned and a specified torque difference is obtained (in the case of vehicles which are not equipped with LSD, the driving wheels will not be fixed and the judged value obtained from differences in sums of diagonal pair of wheels becomes 0). This is also due to the fact that driving wheels turn with differential differences existing when a certain torque difference is exceeded by a turning movement.

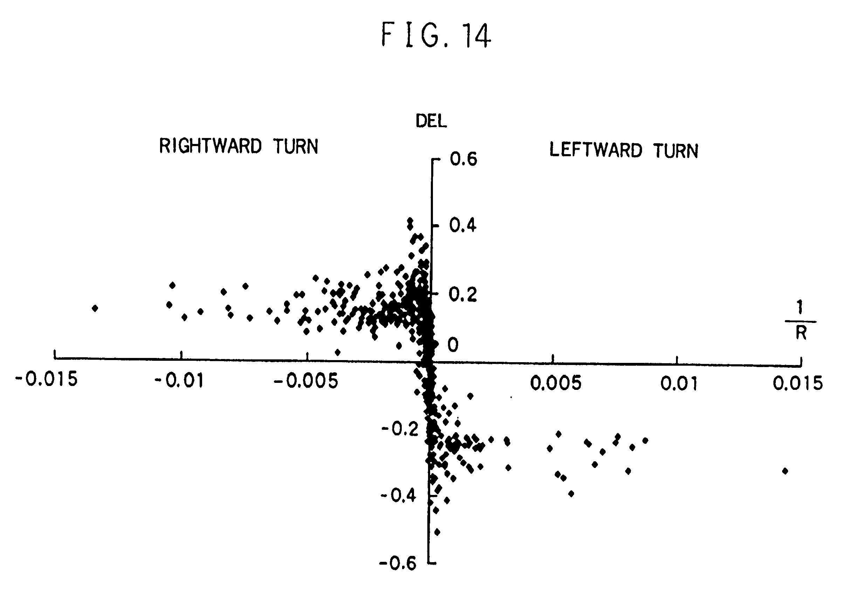

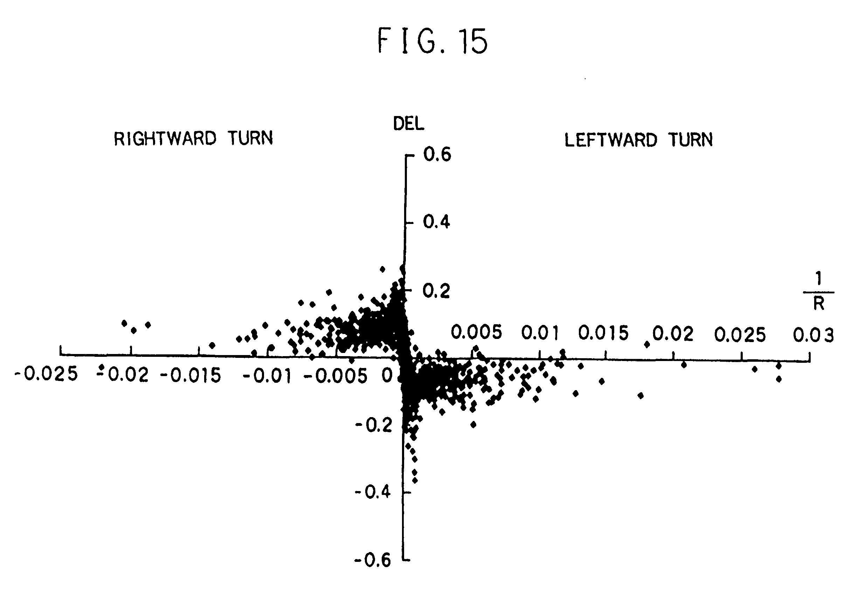

Due to these two points, torque from road surfaces is more easily transmitted to summer tyres, and differentiation is released since a torque difference is generated also at a large turning radius. On the other hand, no differential difference is generated unless the turning radius becomes smaller than that of summer tyres since torque is hard to be transmitted due to easier slipping of winter tyres so that differentiation is hard to be released, thereby the judged values (DEL values) for winter tyres in the proximity of the straight lines as shown in Figure 14 becomes larger than the judged values (DEL values) for summer tyres in the proximity of the straight line as shown in Figure 15. It should be noted that judged values differ between left and right turn.

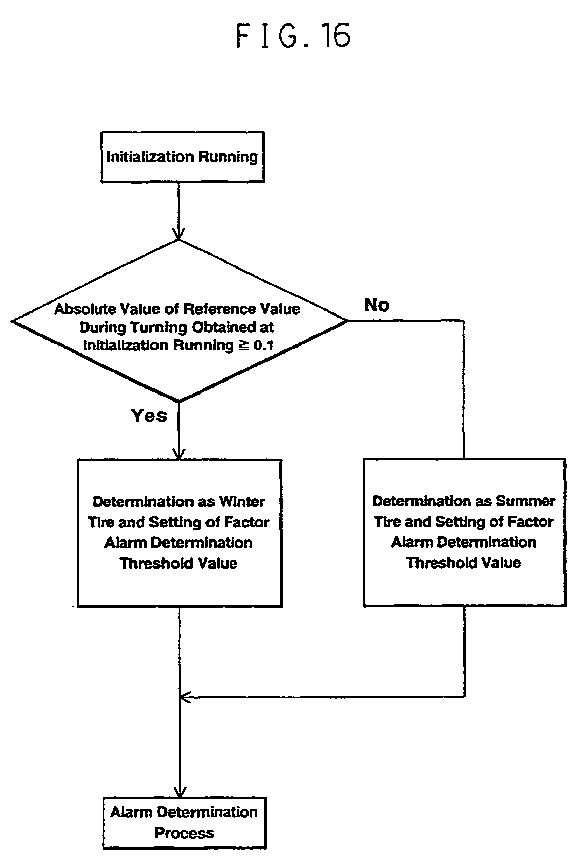

Therefore, it can be understood that discrimination can be made whether these tyres are summer tyres or winter tyres based on the size of judged values. In the apparatus for alarming decrease in air-pressure of a LSD vehicle, averages of judges values in the proximity of the straight line, at left turn, and at right turn are respectively obtained at initialisation running with tyres of normal internal pressure, and these are set as reference values, and determination of decompression is performed based on amounts of deviation therefrom. In this embodiment, the reference value for the left turn is -0.2197 and the reference value for the right turn is 0.1237 for winter tyres, and the reference value for the left turn is -0.0463 and the reference value for the right turn is 0.0605 for summer tyres. Thus, at the time of discriminating tyres, when the absolute values of reference values at the time of right and left turn are both not less than 0.1 as shown in Figure 16, it is determined that the tyres are winter tyres, and otherwise, it is determined that the tyres are summer tyres.

In this manner, after discriminating through a discriminating means whether the tyres attached to the driving shaft are summer tyres or winter tyres, it is determined whether the internal pressure of a tyre has decreased for each region of the turning radius from the relationship between the reciprocals of the turning radii and the judged values, similarly to the preceding example.

As explained so far, according to the present invention, determination of decompression can be reliably performed in the proximity of a region at which the lateral axis is 0, since the judged values (DEL values) obtained while the differentiation is restricted are focused at points at which the lateral axis is 0, that is, on the vertical axis when the reciprocals of turning radii of the driving wheels are depicted on the lateral axis. Further, in case the four-wheeled vehicle is equipped with a limited slip differential device, determination of decompression is more reliably performed by discriminating between summer tyres and winter tyres.

### Claims

1. An apparatus for alarming decrease in tyre air-pressure in which decrease in internal pressure of tyres is alarmed based on rotational information obtained from tyres attached to a four-wheeled vehicle, comprising a rotational information detecting means (1) which detects rotational information for each tyre, a memory means which stores the rotational information of each tyre, a calculating means, and a determining means which determines decrease in internal pressure of tyres, **characterized in that** the calculating means calculates reciprocals of turning radii based on rotational information of tyres attached to the driving shaft from among the rotation information of each tyre and judged values from the rotational information of each tyre, and that the determining means determines decrease in internal pressure of tyres separately for each of the three regions of the turning radii "Rightward turn", "Straight-ahead driving" and "Leftward turn" from a relationship between the reciprocals of the turning radii and judged values.

2. A method for alarming decrease in tyre air-pressure in which decrease in internal pressure of tyres is alarmed based on rotational information obtained from tyres attached to a four-wheeled vehicle, **characterised in that** decrease in internal pressure of a tyre is determined separately for each of the three regions of the turning radii "Rightward turn", "Straight-ahead driving" and "Leftward turn" from a relationship between reciprocals of turning radii calculated from rotational information of tyres attached to the driving shaft of the four-wheeled vehicle and judged values calculated from the rotational information of tyres attached to the four-wheeled vehicle.

3. An apparatus according to claim 1, **characterised in that** the four-wheeled vehicle is equipped with a limited slip differential device and the apparatus further includes a discriminating means which discriminates whether the tyres attached to the driving shaft are summer tyres or winter tyres from the relationship between the reciprocals of the turning radii and judged values.

4. A method according to claim 2, **characterised in that** the four-wheeled vehicle is equipped with a limited slip differential device and decrease in internal pressure of the tyre is determined for each region of the turning radii after discriminating whether the tyres attached to the driving shaft are summer tyres or winter tyres from the relationship between the reciprocals of the turning radii and judged values.

### Patentansprüche

1. Vorrichtung zum Warnen vor einer Abnahme eines Reifenluftdruckes, bei der vor einer Abnahme eines Innendruckes von Reifen auf der Grundlage von Rotationsinformation, die von an einem Vierradfahrzeug angebrachten Reifen erhalten wird, gewarnt wird, umfassend ein Rotationsinformations-Detektionsmittel (1), das Rotationsinformation für jeden Reifen detektiert, ein Speichermittel, das Rotationsinformation von jedem Reifen speichert, ein Berechnungsmittel, und ein Bestimmungsmittel, das eine Abnahme eines Innendruckes von Reifen bestimmt, **dadurch gekennzeichnet, dass** das Berechnungsmittel Kehrwerte von Kurvenfahrradien auf der Grundlage von Rotationsinformation von an der Antriebswelle angebrachten Reifen aus der Rotationsinformation von jedem Reifen und Beurteilungswerte aus der Rotationsinformation von jedem Reifen berechnet, und dass das Bestimmungsmittel eine Abnahme eines Innendruckes von Reifen separat für jeden der drei Bereiche der Kurvenfahrradien: "Rechtskurve", "Geradeausfahrt" und "Linkskurve" aus einer Beziehung zwischen den Kehrwerten der Kurvenfahrradien und Beurteilungswerten bestimmt.

2. Verfahren zum Warnen vor einer Abnahme eines Reifenluftdruckes, bei dem vor einer Abnahme eines Innendruckes von Reifen auf der Grundlage von Rotationsinformation, die von an einem Vierradfahrzeug angebrachten Reifen erhalten wird, gewarnt wird, **dadurch gekennzeichnet, dass** eine Abnahme eines Innendruckes eines Reifens separat für jeden der drei Bereiche der Kurvenfahrradien: "Rechtskurve", "Geradeausfahrt" und "Linkskurve" aus einer Beziehung zwischen Kehrwerten von Kurvenfahrradien, die aus Rotationsinformation von an der Antriebswelle des Vierradfahrzeuges angebrachten Reifen berechnet werden, und Beurteilungswerten, die aus der Rotationsinformation von an dem Vierradfahrzeug angebrachten Reifen berechnet werden, bestimmt wird.

3. Vorrichtung nach Anspruch 1, **dadurch gekennzeichnet, dass** das Vierradfahrzeug mit einem Sperrdifferenzial ausgestattet ist und die Vorrichtung darüber hinaus ein Unterscheidungsmittel umfasst, das aus der Beziehung zwischen den Kehrwerten der Kurvenfahrradien und Beurteilungswerten unterscheidet, ob die an der Antriebswelle angebrachten Reifen Sommerreifen oder Winterreifen sind.

4. Verfahren nach Anspruch 2, **dadurch gekennzeichnet, dass** das Vierradfahrzeug mit einem Sperrdifferenzial ausgestattet ist, und eine Abnahme eines Innendruckes des Reifens für jeden Bereich der Kurvenfahrradien aus der Beziehung zwischen den Kehrwerten der Kurvenfahrradien und Beurteilungswerten bestimmt wird, nachdem unterschieden worden ist, ob die an der Antriebswelle angebrachten Reifen Sommerreifen oder Winterreifen sind.

**Revendications**

1. Appareil d'alarme de réduction de pression d'un pneumatique, dans lequel la réduction de la pression interne des pneumatiques produit une alarme sur la base des informations de rotation obtenues à partir des pneumatiques fixés à un véhicule à quatre roues motrices, comprenant un moyen de détection des informations de rotation (1) qui détecte les informations de rotation pour chaque pneumatique, un moyen de mémoire qui mémorise les informations de rotation de chaque pneumatique, un moyen de calcul, et un moyen de détermination qui détermine la réduction de la pression interne des pneumatiques, **caractérisé en ce que** le moyen de calcul calcule les inverses des rayons de braquage sur la base des informations de rotation des pneumatiques fixés à l'arbre d'entraînement parmi les informations de rotation de chaque pneumatique et des valeurs estimées d'après les informations de rotation de chaque pneumatique, et **en ce que** le moyen de détermination détermine la réduction de la pression interne des pneumatiques séparément pour chacune des trois zones des rayons de braquage : « virage à droite », « conduite en ligne droite » et « virage à gauche » à partir d'une relation entre les inverses des rayons de braquage et les valeurs estimées.

2. Procédé d'alarme de réduction de pression d'un pneumatique, dans lequel la réduction de la pression interne des pneumatiques produit une alarme sur la base des informations de rotation obtenues à partir des pneumatiques fixés à un véhicule à quatre roues motrices, **caractérisé en ce que** la réduction de la pression interne d'un pneumatique est déterminée séparément pour chacune des trois zones des rayons de braquage : « virage à droite », « conduite en ligne droite » et « virage à gauche » à partir d'une relation entre les inverses des rayons de braquage calculés à partir des informations de rotation des pneumatiques fixés à l'arbre d'entraînement du véhicule à quatre roues motrices et les valeurs estimées calculées à partir des informations de rotation des pneumatiques fixés au véhicule à quatre roues motrices.

3. Appareil selon la revendication 1, **caractérisé en ce que** le véhicule à quatre roues motrices est équipé d'un dispositif de différentiel à glissement limité et l'appareil comprend en outre un moyen de discrimination qui discrimine si les pneumatiques fixés à l'arbre d'entraînement sont des pneumatiques d'été ou des pneumatiques d'hiver à partir de la relation entre les inverses des rayons de braquage et les valeurs estimées.

4. Procédé selon la revendication 2, **caractérisé en ce que** le véhicule à quatre roues motrices est équipé d'un dispositif de différentiel à glissement limité et la réduction de la pression interne du pneumatique est déterminée pour chaque zone des rayons de braquage après avoir discriminé si les pneumatiques fixés à l'arbre d'entraînement sont des pneumatiques d'été ou des pneumatiques d'hiver à partir de la relation entre les inverses des rayons de braquage et les valeurs estimées.

# FIG. 1

# FIG. 2

# FIG. 3

RIGHTWARD TURN　　　　　LEFTWARD TURN

DEL

RR DECOMPRESSION
FL DECOMPRESSION

NORMAL AIR PRESSURE

RR DECOMPRESSION
FL DECOMPRESSION

$\dfrac{1}{R_o}$

RL DECOMPRESSION
FR DECOMPRESSION

NORMAL AIR PRESSURE

RL DECOMPRESSION
FR DECOMPRESSION

EP 0 897 816 B1

# FIG. 4

RR DECOMPRESSION
FL DECOMPRESSION

NORMAL AIR PRESSURE

DEL

RR DECOMPRESSION
FL DECOMPRESSION

$\dfrac{1}{R}$

RL DECOMPRESSION
FR DECOMPRESSION

NORMAL AIR PRESSURE

RL DECOMPRESSION
FR DECOMPRESSION

# FIG. 5

# FIG. 6

RIGHTWARD TURN    DEL    LEFTWARD TURN

0.75

FL (DECOMPRESSION BY 40 %)

$\dfrac{1}{R}$

-0.02    0.02

FR (DECOMPRESSION BY 40 %)

-0.75

# FIG. 7

RIGHTWARD TURN

DEL

0.75

LEFTWARD TURN

RR (DECOMPRESSION
BY 40 %)

$\dfrac{1}{R}$

-0.02

0.02

RL (DECOMPRESSION
BY 40 %)

-0.75

# F I G. 8

RIGHTWARD TURN   DEL   LEFTWARD TURN

NORMAL AIR PRESSURE

$\frac{1}{R_o}$

0.75

-0.75

-0.02   0.02

# FIG. 9

RIGHTWARD TURN    DEL    LEFTWARD TURN

0.75

FL (DECOMPRESSION BY 40 %)

$\dfrac{1}{R_O}$

-0.02    0.02

FR (DECOMPRESSION BY 40 %)

-0.75

# F I G. 10

RIGHTWARD TURN

LEFTWARD TURN

DEL

0.75

RR (DECOMPRESSION BY 40 %)

$\dfrac{1}{R_o}$

-0.02

0.02

RL (DECOMPRESSION BY 40 %)

-0.75

# FIG. 11

# FIG. 12

EP 0 897 816 B1

# F I G. 13

SW

WW

TORQUE S

SLIP RATE $\mu$

# F I G. 14

# FIG. 15

LEFTWARD TURN

RIGHTWARD TURN

DEL

$\frac{1}{R}$

# FIG. 16

Initialization Running

Absolute Value of Reference Value
During Turning Obtained at
Initialization Running ≧ 0.1

No

Yes

Determination as Winter
Tire and Setting of Factor
Alarm Determination
Threshold Value

Determination as Summer
Tire and Setting of Factor
Alarm Determination
Threshold Value

Alarm Determination
Process